Europäisches Patentamt

European Patent Office

Office européen des brevets

(11) Veröffentlichungsnummer: **0 421 077 A1**

(12) **EUROPÄISCHE PATENTANMELDUNG**

(21) Anmeldenummer: 90114634.0

(51) Int. Cl.⁵: **C01G 25/02, C04B 35/48**

(22) Anmeldetag: **31.07.90**

(30) Priorität: **30.09.89 DE 3932780**

(43) Veröffentlichungstag der Anmeldung:
**10.04.91 Patentblatt 91/15**

(84) Benannte Vertragsstaaten:
**AT BE CH DE DK ES FR GB IT LI NL SE**

(71) Anmelder: **HÜLS AKTIENGESELLSCHAFT**
**Patentabteilung / PB 15 - Postfach 13 20**
**W-4370 Marl 1(DE)**

(72) Erfinder: **Scharf, Helmut, Dr.**
**Eschener Gaste 58**
**W-2960 Aurich(DE)**

(54) Zirkondioxidpulver, Verfahren zu seiner Herstellung, dessen Verwendung sowie daraus hergestellte Sinterkörper.

(57)
1. Zirkondioxidpulver, das gegebenenfalls stabilisiert ist, und Verfahren zu seiner Herstellung.

2.1 Bei den bisher durchgeführten Verfahren zur Herstellung von Zirkondioxidpulvern stellen die Verwendung von wäßrigen Lösungen und die Abtrennung von Niederschlägen wesentliche Nachteile dar. Außerdem besitzen diese Verfahrensprodukte aufgrund einer inhomogenen Stabilisatorverteilung und dem Vorhandensein von großen Kristalliten und Agglomeraten oft nicht die gewünschten Fließ-, Preß- und Sintereigenschaften.

2.2 Ein gegebenenfalls stabilisiertes Zirkondioxidpulver mit guten Eigenschaften wird unter Vermeidung der nachteiligen Verfahrensmaßnahmen dadurch erhalten, daß Zirkonylchlorid und gegebenenfalls ein Stabilisator oder sein Precursor in Gegenwart von Ammoniumchlorid aufgeschmolzen, die Schmelze durch Abdampfen von Wasser und Chlorwasserstoff bis zur Trockne eingedampft, das Ammoniumchlorid absublimiert und das Reaktionsprodukt bei erhöhten Temperaturen calciniert und der Rückstand gegebenenfalls gemahlen wird.

2.3 Das Zirkondioxidpulver eignet sich zur Herstellung von Sinterkörpern, die hohen mechanischen und/oder thermischen Belastungen ausgesetzt werden können.

EP 0 421 077 A1

## ZIRKONDIOXIDPULVER, VERFAHREN ZU SEINER HERSTELLUNG, DESSEN VERWENDUNG SOWIE DARAUS HERGESTELLTE SINTERKÖRPER

In vielen technischen Bereichen werden an die mechanischen und/oder thermischen Eigenschaften der Konstruktionswerkstoffe immer höhere Anforderungen gestellt, die zum Teil nur noch von keramischen Werkstoffen, wie z. B. Zirkondioxid, erfüllt werden können. Das für Zirkondioxid-Sinterkörper als Ausgangsmaterial verwendete $ZrO_2$-Pulver wird in der Regel in mit anderen Oxiden, wie z. B. $Y_2O_3$, $CeO_2$ (oder Gemische Seltener Erden), CaO und/oder MgO, teil- oder vollstabilisierter Form eingesetzt. Damit die aus dem dotierten $ZrO_2$, z. B. durch Pressen oder Schlickerguß, hergestellten Grünlinge das gewünschte Sinterverhalten und die gesinterten Formkörper die angestrebten guten mechanischen und thermischen Eigenschaften aufweisen, ist es erforderlich, daß das zudosierte Oxid möglichst gleichmäßig in dem $ZrO_2$-Gitter verteilt ist. Außerdem muß das Pulver fließfähig sein, und die Pulverteilchen sollten aus lockeren Agglomeraten bestehen.

Als Ausgangsmaterialien für die Herstellung von $ZrO_2$-Pulvern dienen Baddeleyite (verunreinigtes $ZrO_2$) oder Zirkonsande ($ZrO_2$ x $SiO_2$). Ihre Überführung in reine $ZrO_2$-Pulver geschieht großtechnisch nach zwei Routen.

Bei der ersten Methode werden die Ausgangsmaterialien bei hohen Temperaturen alkalisch aufgeschlossen und die erhaltenen Verbindungen hydrolysiert, das erhaltene hydratisierte Zirkonhydroxid in Schwefelsäure wieder aufgelöst und mit Ammoniak wieder als basisches Sulfat oder Hydroxid gefällt und schließlich calciniert. Diese Verfahren sind aufwendig, und die erhaltenen Pulver besitzen relativ große Kristallite, die zu harten Agglomeraten zusammengefügt sind, so daß sich diese Pulver nur schwer zu hochdichten Sinterkörpern verarbeiten lassen.

Bei der zweiten Gruppe von Verfahren wird der Zirkonsand in Gegenwart von Kohlenstoff mit Chlor umgesetzt und das erhaltene Zirkon tetrachlorid zu Zirkonylchlorid ($ZrO_2Cl$ x $8H_2O$) hydrolysiert, das dann nach verschiedenen Methoden zu $ZrO_2$-Pulver verarbeitet wird.

Ein häufig angewandtes Verfahren zur Herstellung von $ZrO_2$-Pulvern auf Basis Zirkonylchlorid besteht in der Umsetzung einer wäßrigen Lösung von Zirkonylchlorid mit einer wäßrigen Lösung von Ammoniak oder einer $NH_3$-abgebenden Verbindung und Calcinierung des durch Filtration abgetrennten basischen Zirkonhydroxids. Nachteilig bei diesem Verfahren ist, daß die anfallenden Hydroxid-Niederschläge schwer filtrierbar sind und die calcinierten Produkte harte Agglomerate darstellen.

Eine Verfeinerung dieses Verfahrens mit dem Ergebnis eines besser verarbeitbaren Pulvers wird dadurch erreicht, daß das gefällte Zirkonhydroxid vor dem Calcinieren mit Hilfe einer Azeotropdestillation teilweise entwässert wird. Durch wiederholtes Auflösen des Niederschlages in Salpetersäure und Fällen mit Ammoniak kann das Hydroxid zusätzlich chloridfrei gemacht werden. Das erhaltene Zirkonhydroxid wird mit Citronensäure in den entsprechenden Komplex überführt, durch Azeotropdestillation entwässert und anschließend calciniert. Diese Verfahren sind arbeitsintensiv und wegen der Stickoxide umweltbelastend.

Bei dem in der europäischen Patentschrift 0 251 538 beschriebenen Verfahren wird eine wäßrige Lösung von Zirkonylchlorid über einen längeren Zeitraum bei Temperaturen unterhalb des Siedepunktes des Wassers erwärmt. Das gebildete Zirkonhydroxid wird von der Losung abgetrennt, gewaschen und calciniert. Die Abtrennung des sehr feinen Hydroxid-Niederschlages von der Lösung ist sehr schwierig, und das erhaltene $ZrO_2$ ist nicht stabilisiert. Um es zu stabilisieren, müssen die Partikel nach der Calcinierung resuspendiert und durch eine alkalische Fällung mit dem Hydroxid des Stabilisators belegt werden. Nach der Abtrennung von der Lösung wird das Produkt erneut calciniert. Durch diese zusätzlichen Verfahrensschritte wird das Verfahren noch schwieriger.

Die bisher beschriebenen Verfahren arbeiten alle in wäßriger Lö sung. Es ist aus älterer Literatur, z.B. die in Gmelins Handbuch der anorganischen Chemie, 8. Auflage, Band 42 (Zirkon), Seiten 303 bis 306, zitierten Arbeiten, bekannt, daß festes $ZrOCl_2$ x $8H_2O$ durch starkes Erhitzen unter Abgabe von $H_2O$, HCl und eventuell $ZrCl_4$ in $ZrO_2$ umgewandelt werden kann. Die so erhaltenen Produkte stellen aber keine hochwertigen Pulver dar, und eine nachträgliche, einwandfreie Stabilisierung des $ZrO_2$ ist nicht möglch, so daß diese Methode bisher nicht zu einem technischen Verfahren entwickelt wurde.

Es war daher Aufgabe der vorliegenden Erfindung, ein mikrokristallines, in weichen Agglomeraten vorliegendes und ggf. stabilisiertes Zirkondioxidpulver bereitzustellen, das die gegebenenfalls enthaltenen Stabilisatoren in homogener Verteilung enthält und gute Fließ-, Preß-, Spritz- und Sintereigenschaften besitzt sowie ein Verfahren zur Herstellung eines solchen Pulvers zu entwickeln.

Diese Aufgabe wird erfindungsgemäß dadurch gelöst, daß man eine Ammoniumchlorid enthaltende Schmelze von Zirkonylchlorid ($ZrOCl_2$ x $8H_2O$) und gegebenenfalls einem Stabilisator oder seines Precursor herstellt, die Schmelze durch Abdampfen von Nasser und Chlorwasserstoff eintrocknet, das Ammoniumchlorid bei erhöhter Temperatur absublimiert, das Reaktionsprodukt calciniert und den Rückstand gegebenenfalls mahlt.

Das Aufschmelzen des Zirkonylchlorids, gegebenenfalls zusammen mit dem Precursor eines Stabilisators, kann von Anfang an in Gegenwart von Ammoniumchlorid durchgeführt werden, das Ammoniumchlorid kann aber auch erst nach dem Aufschmelzen des $ZrOCl_2 \times 8H_2O$ zu der fertigen Schmelze hinzugegeben werden.

Das Molmengenverhältnis Zirkonylchlorid : Ammoniumchlorid kann zwischen 10 : 1 und 1 : 10 liegen. Prinzipiell können aber auch kleinere und größere Mengen an Ammoniumchlorid verwendet werden. Bei kleinen Ammoniumchlorid-Mengen werden jedoch härtere Agglomerate erhalten. Bei der Verwendung von großen Mengen an Ammoniumchlorid hängt die Produktqualität vom Zeitpunkt der Zugabe des Ammonium chlorids und gegebenenfalls dem Vorhandensein eines Stabilisators oder seines Precursors ab. Sind das Ammoniumchlorid und gegebenenfalls der Stabilisator, bzw. sein Precursor, bereits vor dem Aufschmelzen zugegen, so wird beim Erwärmen keine einwandfreie Schmelze erhalten und die Größe und Härte der Agglomerate und gegebenenfalls die Verteilung des Stabilisators im fertigen Pulver hängt von der durch Mahlen oder Mörsern erzielten Homogenität der Ausgangssalze ab.

Wird das Ammoniumchlord erst zu der fertigen Schmelze des Zirkonylchlorids und gegebenenfalls des Stabilisators bzw. seines Precursors hinzugegeben, so hat die Menge zwar keinen Einfluß auf die Produktqualität, aber das Ammoniumchlorid löst sich nicht mehr vollständig in der Schmelze und das Gemisch wird mit zunehmender Menge an Ammoniumchlorid immer fester, so daß das Rühren des Ansatzes immer schwieriger wird. Da das Ammoniumchlorid nach dem Abdampfen von Wasser und Chlorwasserstoff wieder absublimiert werden muß, sind große Mengen an Ammoniumchlorid auch unter verfahrenstechnischen und wirtschaftlichen Gesichtspunkten nicht sinnvoll. Es werden daher bevorzugt Molmengenverhältnisse Zirkonylchlorid : Ammoniumchlorid von 5 : 1 bis 1 5 und besonders solche von 2 : 1 bis 1 : 2 eingesetzt.

Das erfindungsgemäße bzw. erfindungsgemäß hergestellte Zirkondioxidpulver kann je nach dem Einsatzzweck teil- oder vollstabilisiert werden. Als Stabilisator können Yttriumoxid und/oder seine Precursor, das sind Verbindungen des Yttriums, die bei dem Herstellprozeß des Zirkondioxids in ihre oxidische Form umgewandelt werden, eingesetzt werden. Als Precursor kommen z. B. Hydroxide, Halogenide, organische Salze und organische Komplexe des Stabilisatormetalles in Frage. Bevorzugt wird als Precursor das Chlorid, da die Ausgangsverbindung für das $ZrO_2$ ebenfalls in Chlorid-Form eingesetzt wird.

Für teilstabilisiertes $ZrO_2$ beträgt die Stabilisatormenge (Yttriumoxid) in der Regel bis zu 7 Gewichtsprozent, besonders zwischen 0,1 und 6 Gewichtsprozent und ganz besonders zwischen 2 und 5 Gewichts prozent, bezogen auf das fertige Pulver. Für vollstabilisiertes $ZrO_2$ liegen die Mengen dagegen zwischen 7 und 15 Gewichtsprozent, vorzugsweise zwischen 8 und 10 Gewichtsprozent, wobei die Grenzen zwischen Voll- und Teilstabilisierung in Abhängigkeit von den übrigen Pulvereigenschaften und den Sinterbedingungen fließend sind.

Nach dem Aufschmelzen der Salze wird die Schmelze bis zur Trockne eingedampft. Hierbei wird ein Teil des Kristallwassers und des Chlorids in Form von Salzsäure und Chlorwasserstoff abgedampft. Die Schmelze kann jedoch auch einige Zeit unter Rückfluß eines Teiles des Kristallwassers und des Chlorwasserstoffes als Salzsäure temperiert werden. Während des Eindampfens bleibt die Temperatur zunächst konstant, um gegen Ende des Eindampfvorganges in Abhängigkeit von der Bad- bzw. Ofentemperatur anzusteigen. Das Eindampfen kann durch Durchleiten eines bei den Eindampfbedingungen innerten Gases, wie z. B. Luft oder Stickstoff, weiter beschleunigt werden. Durch Anlegen eines Vakuums, vor allem gegen Ende des Eindampfvorganges, kann das Eindampfen weiter beschleunigt werden. Die Bad-oder Ofentemperatur kann während des Eindampfens konstant gehalten oder aber auch gesteigert werden.

Die als Pulver vorliegende eingetrocknete Schmelze wird anschließend durch Steigerung der Temperatur calciniert. Beim Calcinieren wird das in dem Pulver enthaltene Ammoniumchlorid absublimiert. Die Sublimationstemperatur des Ammoniumchlorids liegt laut Literatur bei 611 K. Das Absublimieren des Ammoniumchlorides und der Calciervorgang können durch Durchleiten eines Gases, bevorzugt wird Luft verwendet, beschleunigt werden. Die Gasmengen können im Prinzip beliebig sein. Große Gasmengen haben jedoch den Nachteil, daß es schwierig ist, das Ammoniumchlorid wieder aus dem Gasstrom abzutrennen. Daher werden in der Regel schwache Gasströme mit Strömungsgeschwindigkeiten von 0,001 bis 0,1 m/s bevorzugt. Die Calciertemperatur kann je nach der gewünschten Kristallitgröße des $ZrO_2$ und Härte der Agglomerate in weiten Grenzen schwanken. Die untere Temperaturgrenze wird durch die Bedingung festgelegt, daß das Ammoniumchlorid möglichst vollständig absublimiert sein muß. Des weiteren sollte das $ZrO_2$ durchkristallisiert sein, es sei denn, daß für besondere Zwecke amorphes oder teilkristallines $ZrO_2$ gewünscht wird. Die obere Temperaturgrenze ist bedingt durch den einsetzenden Sintervorgang. Bevorzugt werden Calciertemperaturen von 780 bis 1 280 K und besonders solche zwischen 880 und 1 080 K. Die Calcinierdauer richtet sich nach der Calciniertemperatur und den gewünschten Pulvereigenschaften. In der Regel beträgt sie 0,7 bis 90 ks, bevorzugt werden Zeiten zwischen 1,8 und 8 ks. Nach dem Calcinieren wird das erhaltene Pulver gegebenenfalls durch Mahlen, das trocken oder in flüssigen Medien, wie z. B. Nasser oder Alkohole, erfolgen kann, und gegebenenfalls Sieben auf die gewünschte Korngröße gebracht.

Das erfindungsgemäße Verfahren kann einstufig durchgeführt werden, indem das Aufschmelzen der Salze und die Zugabe des Ammoniumchlorids, das Eintrocknen der Schmelze und das Absublmieren des Ammoniumchlorids sowie das Calcinieren des erhaltenen Pulvers in einem einzigen Behälter bzw. Ofen durchgeführt werden und die Temperatur durch ein entsprechendes Temperaturprogramm gesteuert wird. Es kann jedoch auch mehrstufig erfolgen, indem das Aufschmelzen der Salze und die Zugabe des Ammoniumchlorids sowie das Eindampfen der Schmelze in einem Apparat durchgeführt werden und das erhaltene Pulver, gegebenenfalls nach Zwischenschaltung eines Mahlschrittes, anschließend in einem separaten Ofen von dem Ammoniumchlorid befreit und calciniert wird. Es ist auch möglich, das Absublimieren des Ammoniumchlorids für sich in einem separaten Verfahrensschritt durchzuführen. Das einstufige Verfahren kann z. B. in einem Trommelofen und das mehrstufige Verfahren in einem Rührbehälter und einem Drehrohrofen durchgeführt werden. Da die Salzschmelze sehr korrosiv ist, müssen für die Apparate entsprechend korrossionsbeständige Materialien verwendet werden, z. B. für den Niedertemperaturbereich Teflon, Glas, Quarz oder Emaille und für den Ofen Aluminiumoxid oder Zirkondioxid.

Die erfindungsgemäßen bzw. erfindungsgemäß hergestellten und gegebenenfalls stabilisierten Zirkondioxidpulver besitzen je nach den Herstellbedingungen Kristallitgrößen von ca. 5 bis 40 nm und weisen eine lockere Agglomeratstruktur mit einer in der Regel bimodalen Porenverteilung auf. Die Pulver lassen sich gut zu Grünlingen mit hoher Dichte verpressen und führen schließlich zu Sinterkörpern, die porenfrei dicht sintern und die gewünschten mechanischen und thermischen Eigenschaften besitzen.

Die nachfolgenden Beispiele sollen die Erfindung näher erläutern. Die in den Beispielen benutzten Abkürzungen, Meß- und Prüfverfahren sind:

## EDX

Die Elementverteilung in den Proben wurde mit einem handelsublichen EDAX-Gerät (Typ: EDAX 9900), angeschlossen an ein handelsübliches Rasterelektronmikroskop, nach der Methode der energiedispersiven Röntgenanalyse (EDX) durchgeführt. Die Auflösung betrug ca. 25 nm.

## REM

Handelsübliches Rasterelektronenmikroskop

## STEM

Handelsübliches Transmissions-Rasterlektronenmikroskop

## Porenstruktur-Verteilung

Die Porenstruktur-Verteilung wurde mit einem handelsüblichen Hg-Hochdruckporosimeter der Firma Carlo Erba untersucht.

## Oberfläche

Die Oberfläche der Pulver wurde mit einem handelsüblichen Gerät nach der BET (Brunauer-Emmett-Teller)-Methode ($N_2$) und mit einem handelsüblichen Hg-Porosimeter der Firma Carlo Erba bestimmt.

## Kristallphase

4

Die Kristallstruktur wurde mit einem handelsüblichen Gerät mit Hilfe der Röntgenbeugungsanalyse ermittelt.

Kristalldurchmesser

Der Durchmesser der Kristallite wurde durch Ausmessen der Kristal lite in den STEM-Aufnahmen und aus den Einzelpeaks der Röntgenbeugungsaufnahmen erhalten. Als Difraktometer wurde ein handelsübliches Gerät der Firma Philips (Typ: PW 1800) verwendet.

Sinterverhalten

Die Kinetik des Sinterns der Proben (Längenänderung als Funktion der Temperatur) wurde mit einem handelsüblichen Dilatometer der Fa. Baehr verfolgt.

Chlorgehalt

Der Chlorgehalt der Proben wurde mit einem handelsüblichen Gerät nach der Röntgenfluoreszenzmethode bestimmt.

Härte der Agglomerate

Da es für die Bestimmung der Härte der Agglomerate keine allgemein übliche Methode gibt, wurde sie qualitativ - und nur in Relation der Produkte zueinander - durch Zerreiben der Pulver zwischen zwei Glasscheiben mit den Fingern ermitteln.

Vickershärte

Die Härte der gesinterten Proben wurde nach der Methode von Vickers bestimmt (DIN 50 351).

Beispiel 1

300 g $ZrOCl_2$ x $8H_2O$ und 15,4 g $YCl_3$ x $6H_2O$ wurden in einem Mörser homogenisiert und bei 413 K aufgeschmolzen. In dieser Schmelze wurden 34,9 g $NH_4Cl$ aufgelöst und die Schmelze 900 s unter Rückfluß der entweichenden Salzsäure temperiert. Anschließend wurde die Schmelze durch Temperaturerhöhung auf 473 K und Abdampfen von Wasser und Chlorwasserstoff bis zur Trockne eingedampft. Nach Erreichen der Temperatur von 473 K wurde der Eindampfvorgang durch Anlegen eines Vakuums von 50 hPa beschleunigt. Das erhaltene Pulver wurde in einem Röhrenofen unter einem leichten Luftstrom (ca. 35 $cm^3/s$) 3 ks bei 927 K calciniert. Hierbei sublimierte das in dem Pulver enthaltene $NH_4Cl$ ab. Das zurückbleibende Reaktionsprodukt wurde 1,8 ks in einer Kugelmühle gemahlen und anschließend analy siert. Das weiche Pulver besaß eine bimodale Porenverteilung und bestand zu 88 % aus tetragonaler und zu 12 % aus monokliner Phase. Die Kristallitgröße wurde aus den STEM-Aufnahmen ermittelt und betrug ca. 8 nm. Das Pulver hatte eine BET-Oberfläche von 54 $m^2/g$. Aus den Hg-Porositätsmessungen ergab sich eine Oberfläche von 32 $g/m^2$. Die mit Hilfe der STEM- und EDX-Methode untersuchte Yttrium-Verteilung ergab, daß das Yttrium homogen in den Kristalliten verteilt war. Aus dem Pulver hergestellte Tabletten zeigten im Dilatometer ein Sintermaximum bei ca. 1480 K und ein Sinterende bei ca. 1 700 K. Tabletten, die zwischen 7 und 30 ks bei 1 870 K gesintert wurden, besaßen Vickershärten zwischen 11,1 und 12,0 GPa.

Beispiele 2 bis 7

Beispiel 1 wurde mit unterschiedlichen Molverhältnissen Zirkonylchlorid : Ammoniumchlorid wiederholt.

Die Ergebnisse sind in der folgenden Tabelle zusammengefaßt.

| | | Pulver | | | | | | Tabletten | |
| | | Oberfläche | | Kristallit-ø | | Phase | | Sintermax. | Vickershärte |
| Bsp.-Nr. | Zr : NH$_4$Cl (mol : mol) | BET [m$^2$] | Hg-Por. [m$^2$] | STEM [nm] | Röntg.* [nm] | tetra [%] | mono [%] | [K] | [GPa] |
|---|---|---|---|---|---|---|---|---|---|
| 2 | 1 : 6,7 | | 14 | 6 | 11 | 81 | 19 | 1516 | 10,5 |
| 3 | 1 : 3,0 | 55 | 20 | | 13 | 84 | 12 | 1533 | |
| 4 | 1 : 1,5 | 58 | 21 | | 13 | 87 | 13 | 1544 | |
| 5 | 1 : 0,7 | 54 | 32 | 8 | 16 | 89 | 11 | 1517 | 11,1 |
| 6 | 1 : 0,3 | 61 | 21 | | 11 | 92 | 8 | 1514 | |
| 7 | 1 : 0,1 | 50 | 20 | | 14 | 94 | 6 | 1492 | 10,5 |

*) tetragonale Phase

In den Schliffbildern der gesinterten Tabletten waren keine Poren zu erkennen.

## Beispiel 8

95,2 g ZrOCl$_2$ x 8H$_2$O und 4,9 g YCl$_3$ x 6 H$_2$O wurden in einem Dreihalskolben aus Glas unter Rühren bei 413 K aufgeschmolzen. Zu dieser Schmelze wurden 100 g Ammoniumchlorid portionsweise hinzugegeben. Hierbei wurde die Schmelze zunächst dünnflüssiger, um schließlich einen soeben noch rührbaren dicken Kristallbrei zu ergeben, der anschließend bei 473 K bis zur Trockne eingedampft wurde. Gegen Ende des Eindampfvorganges wurde das Trocknen durch Anlegen eines Vakuums von 3 hPa beschleunigt. Das getrocknete Produkt wurde in einer Kugelmühle 1,8 ks gemahlen und anschließend mit einer Temperatursteigerung von 0,17 K/s auf 923 K erhitzt und 3,6 ks bei dieser Temperatur calciniert. Während des Aufheizens sublimierte das Ammoniumchlorid ab. Dieser Vorgang wurde durch einen leichten Luftstrom (ca. 17 cm$^3$/s) beschleunigt. Das erhaltene Produkt wurde in einer Kugelmühle gemahlen (1,8 ks) und analysiert. Die Kristallite besaßen laut STEM-Aufnahme und Röntgenbeugungsanalyse einen Durchmesser von 5 bis 11 nm und bestanden zu 81 % aus tetragonaler und zu 19 % aus monokliner Phase. Das Sintermaximum lag im Dilatogramm bei 1 516 K. Das erhaltene Pulver wurde mit einem Druck von 560 MPa zu einer Tablette verpreßt und bei 1 873 K 18 ks lang gesintert. Im Schliffbild waren keine Poren zu erkennen und die Vickershärte betrug 10,5 GPa.

## Beispiele 9 bis 11

Der Versuch von Beispiel 1 wurde mit unterschiedlichen Calciniertemperaturen wiederholt und der Restchlorgehalt in den Pulvern bestimmt:

| Calciniertemperatur [K] | 1 073 | 1 273 | 923 + 1 073 |
|---|---|---|---|
| Calcinierzeit [s] | 3 600 | 3 600 | 3 600 + 5,8 · 10$^4$ |
| Chlorgehalt [%] | 0,77 | 0 | + 0,12 |

## Beispiel 12

In eine Schmelze, bestehend aus 500,0 g ZrOCl$_2$ x 8H$_2$O und 20,5 g YCl$_3$ x 6H$_2$O, wurden bei 413 K 58,1 g NH$_4$Cl eingerührt und der Ansatz 600 s bei dieser Temperatur unter Rückfluß gehalten. Anschließend wurde die Schmelze durch Temperatursteigerung auf 473 K und gegen Ende des Vorganges durch Anlegen eines Vakuums von 5 hPa eingetrocknet, abgekühlt und mit Hilfe von EDX-Punktspektren analysiert. Das Yttrium war in dem Pulver homogen verteilt. Dieses Pulver wurde in einem zweiten Arbeitsgang in einem Ofen durch Temperaturerhöhung von Raumtemperatur auf 923 K in Gegenwart eines Luftstromes von ca. 50 cm$^3$/s vom Ammoniumchlorid befreit und calciniert. Aus dem Pulver bei 730 MPa gepreßte Tabletten zeigten im Dilatometer das Sintermaximum bei 1 467 K und das Sinterende bei 1 650 K. Tabletten, die 800 s bei 1 873 K gesintert wurden, waren porenfrei und besaßen eine Vickershärte von 10,8 GPa. Das Phasenverhältnis tetragonal : monoklin betrug 37/65.

Beispiele 13 und 14

500,0 g $ZrOCl_2$ x $8H_2O$, 25,5 g $YCl_2$ x $6H_2O$ und 58,1 g $NH_4Cl$ wurden in einem Mörser intensiv gemischt und anschließend bei 413 K aufgeschmolzen und 900 s unter Rückfluß gehalten. Die zunächst milchig trübe Schmelze wurde während dieser Zeit etwas klarer und gegen Ende dieser Zeit fiel eine geringe Menge eines feinen weißen Niederschlages aus. Die Temperatur wurde mit 0,7 K/s auf 473 K angehoben. Bei Erreichen dieser Temperatur wurde das Abdampfen von Kasser und Chlorwasserstoff durch Anlegen eines Vakuums von 5 hPa zusätzlich unterstützt. Das zurückbleibende Pulver wurde in einem Mörser gemahlen und anschließend halbiert. Die eine Hälfte wurde 3,6 ks bei 923 K und die andere Hälfte 3,6 ks bei 1 073 K calciniert. Während des Calciniervorganges sublimierte aus beiden Proben Ammoniumchlorid ab. Die Rückstände wurden gemahlen und analysiert:

| | Calciniertemperatur | |
|---|---|---|
| | 923 K | 1073 K |
| BET-Oberfläche [m²/g] | 83 | 46 |
| Hg-Oberfläche [m²/g] | 12 | 32 |
| Phase tetragonal : monoklin | 89/11 | 48/52 |
| Kristallitgröße [nm] tetragonal : monoklin | 9/7 | 19/22 |

Aus beiden Pulvern wurden Tabletten gepreßt, die 7,2 ks bei 1 873 K gesintert wurden. Die gemessenen Vickershärten betrugen 11,2 (Calciniertemperatur 923 K) und 12,0 GPa (Calciniertemperatur 1073 K).

Vergleichsbeispiel

100 g $ZrOCl_2$ x $8H_2O$ und 4,2 g $YCl_3$ x $6H_2O$ wurden ohne den erfindungswesentlichen Zusatz von $NH_4Cl$ aufgeschmolzen und wie im Beispiel 1 beschrieben zu einem Pulver verarbeitet. Das Produkt bestand aus harten Agglomeraten mit einem Durchmesser von 0,5 bis 1 μm, die sich nicht zu hochdichten Formkörpern verpressen und sintern ließen.

**Ansprüche**

1. Zirkondioxidpulver, hergestellt aus einer Ammoniumchlorid enthaltenden Schmelze von Zirkonylchlorid ($ZrOCl_2$ x $8H_2O$) durch Abdampfen von Wasser und Chlorwasserstoff, Absublimieren des Ammoniumchlorids und Calcinieren des Reaktionsproduktes bei erhöhter Temperatur und gegebenenfalls Mahlen des calcinierten Produktes.
2. Zirkondioxidpulver nach Anspruch 1,
dadurch gekennzeichnet,
daß es einen Stabilisator enthält.
3. Verfahren zur Herstellung von Zirkondioxidpulver,
dadurch gekennzeichnet,
daß man eine Ammoniumchlorid enthaltende Schmelze von Zirkonylchlorid ($ZrOCl_2$ x $8H_2O$) herstellt, die

Schmelze durch Abdampfen von Wasser und Chlorwasserstoff eintrocknet, das Ammoniumchlorid bei erhöhter Temperatur absublimiert, das Reaktionsprodukt calciniert und den Rückstand gegebenenfalls mahlt.

4. Verfahren nach Anspruch 3,
dadurch gekennzeichnet,
daß die Umsetzung des Zirkonylchlorids in Gegenwart eines Stabilisators oder seines Precursors durchgeführt wird.

5. Verfahren nach Anspruch 4,
dadurch gekennzeichnet,
daß als Stabilisatorprecursor Yttriumchlorid zugesetzt wird.

6. Verfahren nach den Ansprüchen 3 bis 5,
dadurch gekennzeichnet,
daß das Ammoniumchlorid erst nach dem Aufschmelzen des Zirkonylchlorids zu der Schmelze gegeben wird.

7. Verfahren nach Anspruch 6,
dadurch gekennzeichnet,
daß die Schmelze vor der Zugabe des Ammoniumchlorids unter Rückfluß von Salzsäure getempert wird.

8. Verfahren nach den Ansprüchen 6 und 7,
dadurch gekennzeichnet,
daß die Schmelze nach der Zugabe des Ammoniumchlorids unter Rückfluß von Salzsäure getempert wird.

9. Verfahren nach den Ansprüchen 3 bis 5,
dadurch gekennzeichnet,
daß das Zirkonylchlorid und das Ammoniumchlorid und gegebenenfalls ein Stabilisator oder sein Precursor durch Mahlen homogenisiert werden und gemeinsam aufgeschmolzen werden.

10. Verfahren nach Anspruch 9,
dadurch gekennzeichnet,
daß die Schmelze unter Rückfluß von Salzsäure temperiert wird.

11. Verfahren nach den Ansprüchen 3 bis 10,
dadurch gekennzeichnet,
daß das Eindampfen durch Anlegen eines Vakuums beschleunigt wird.

12. Verfahren nach den Ansprüchen 3 bis 11,
dadurch gekennzeichnet,
daß das Molverhältnis Zirkonylchlorid : Ammoniumchlorid 10 : 1 bis 1 : 10 beträgt.

13. Verfahren nach Anspruch 12,
dadurch gekennzeichnet,
daß das Molverhältnis Zirkonylchlorid : Ammoniumchlord 2 : 1 bis 1 : 2 beträgt.

14. Verfahren nach den Ansprüchen 3 bis 13,
dadurch gekennzeichnet,
daß das Ammoniumchlorid bei Normaldruck oder Vakuum absublimiert wird.

15. Verfahren nach den Ansprüchen 3 bis 14,
dadurch gekennzeichnet,
daß die Calcinierung bei Temperaturen von 780 bis 1 280 K durchgeführt wird.

16. Verfahren nach Anspruch 15,
dadurch gekennzeichnet,
daß die Calcinierung bei einer Temperatur von 880 bis 1 080 K durchgeführt wird.

17. Verwendung der Zirkondioxidpulver gemäß den Ansprüchen 1 und 2 bzw. erhalten nach dem Verfahren der Ansprüche 3 bis 16 zur Herstellung von Sinterkörpern.

18. Sinterkörper, hergestellt aus Zirkondioxidpulver gemäß den Ansprüchen 1 und 2 bzw. erhalten nach dem Verfahren der Ansprüche 8 bis 16.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | BE-A-7 031 07 (STAUFFER CHEMICAL CO.)<br>– – – | | C 01 G 25/02<br>C 04 B 35/48 |
| A | CHEMICAL ABSTRACTS, Band 110, Nr. 22, 29. Mai 1989, Seite 166, Zusammenfassung Nr. 195755v, Columbus, Ohio, US;<br>& JP-A-63 274 625 (E. KATO) 11-11-1988<br>– – – | | |
| A | CHEMICAL ABSTRACTS, Band 96, Nr. 12, März 1982, Seite 142, Zusammenfassung Nr. 87878w, Columbus, Ohio, US; V.A. KOZHEMYAKIN et al.: "Low-waste production of zirconium compounds",<br>& TSVETN. MET. 1981, (10), 75-7<br>– – – | | |
| A | CHEMICAL ABSTRACTS, Band 97, Nr. 24, Dezember 1982, Seite 628, Zusammenfassung Nr. 207102h, Columbus, Ohio, US; T. JIANG: "Preparation and properties of zirconium oxide chloride",<br>& PIGE KEJI 1982, (2), 20-3<br>– – – – – | | |

| RECHERCHIERTE SACHGEBIETE (Int. Cl.5) |
|---|
| C 01 G<br>C 01 B |

Der vorliegende Recherchenbericht wurde für alle Patentansprüche erstellt

| Recherchenort | Abschlußdatum der Recherche | Prüfer |
|---|---|---|
| Den Haag | 17 Januar 91 | LIBBERECHT-VERBEECK |